# EUROPEAN PATENT SPECIFICATION

(11) **EP 1 150 798 B1**
(45) Date of publication and mention of the grant of the patent: **16.04.2003**
(21) Application number: 00945427.3
(22) Date of filing: 11.02.2000
(51) Int. Cl.: B23P 15/00, B21K 1/08, F16C 3/08

(54) **CRANKSHAFT CONSTRUCTION**
KURBELWELLENKONSTRUKTION
STRUCTURE DE VILEBREQUIN

(30) Priority: 11.02.1999 GB 9902979
(43) Date of publication of application: 07.11.2001
(73) Proprietor: UNITED ENGINEERING FORGINGS LIMITED, Bromsgrove, Worcestershire B60 3DZ (GB)
(72) Inventor: HOYES, Michael Edward, UEF Technical Centre, Chesterfield, Derbyshire S40 2EA (GB)
(74) Representative: Moffat, John Andrew
(86) International application number: GB0000438
(87) International publication number: WO00047362

(56) References cited:
- EP-A- 0 684 397
- PATENT ABSTRACTS OF JAPAN vol. 012, no. 484 (M-776), 16 December 1988 (1988-12-16) & JP 63 203226 A (TOYOTA MOTOR CORP), 23 August 1988 (1988-08-23)
- PATENT ABSTRACTS OF JAPAN vol. 016, no. 399 (M-1300), 24 August 1992 (1992-08-24) & JP 04 134107 A (TOYOTA MOTOR CORP), 8 May 1992 (1992-05-08)
- PATENT ABSTRACTS OF JAPAN vol. 005, no. 199 (M-102), 17 December 1981 (1981-12-17) & JP 56 118525 A (YAMAHA MOTOR CO LTD), 17 September 1981 (1981-09-17)

## Description

This invention relates to crankshafts and to a method for their construction, in particular, crankshafts for internal combustion engines notably diesel engines.

Crankshafts have conventionally been made which have a gear wheel for driving a gear train located at one end of the cranks and a flange mounted at the opposite end of the crankshaft for mounting a flywheel. By placing the gear wheel at the other end of the crankshaft adjacent the flywheel flange benefits can be achieved, for example, a reduction in noise and improved efficiency. However to place the gear wheel between the cranks and the flywheel flange poses manufacturing problems since this would normally involve placing the gear wheel on a reduced diameter of the crankshaft and then fitting a flywheel flange. This involves a high degree of control on the fitting process to ensure that the flywheel flange remains secure to the crankshaft with no possibility of loosening in service and the gear wheel also has to be accurately and securely fitted to the crankshaft.

An object of the invention is to provide an improved crankshaft and crankshaft construction method.

According to the invention there is provided a method of forming a steel crankshaft for an internal combustion engine in which the crankshaft has cranks along a portion of its length and the crankshaft carries at one end a gear wheel and a flange for a flywheel, the gear wheel lying between the cranks and the flange, the method including the steps of forming the cranks, the gear wheel and the flange as a single integral unit by forging, machining the gear wheel to form gear wheel teeth, and then subjecting the gear wheel to heat treatment to obtain the desired characteristics for the gear wheel.

Preferably, the heat treatment is achieved using induction heating of the gear wheel.

The gear wheel is intended to drive the valves for the engine through a train of gears meshing with the crankshaft gear wheel. The flange is arranged for connection to a flywheel. In a usual configuration the flywheel and gear wheel are located to the rear of the engine which is usually a diesel engine.

The invention also provides a steel crankshaft for an internal combustion engine comprising a crankshaft having cranks along one portion of its length, and at one end a gear wheel and a flange for a flywheel, the gear wheel lying between the cranks and the flange, and the cranks, the gear wheel and the flange being formed as a unitary construction by forging and subsequent machining of the gear wheel, at least the gear wheel having been subjected to heat treatment following the formation of gear teeth.

Heat treatment of the gear wheel ensures that the gear wheel teeth are hardened and finished to a specification suitable for the gear wheel.

By this arrangement a crankshaft and integral gear wheel and flange are formed which obviate the need to secure, fit and align different components to the crankshaft.

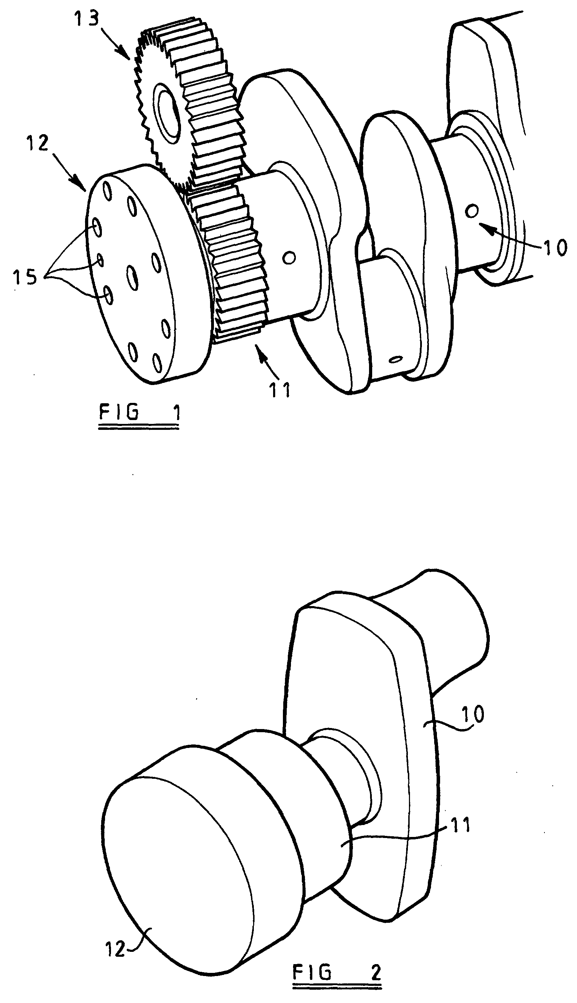

Further features of the invention will appear from the following description of an embodiment of the invention given by way of example only and with reference to the drawings in which Fig 1 is a perspective view of a finished unitary crankshaft construction, and Fig 2 is a view of the construction after forging.

Referring to the drawings a unitary crankshaft is shown which is intended to be particularly suitable for a diesel engine and which is normally located in a vehicle with its longitudinal axis extending in the fore and aft direction of the vehicle.

The crankshaft has a series of cranks 10 (only some of which are shown) extending along the crankshaft. To the rearward end of the crankshaft there is located a timing gear wheel 11 and, at the rearmost end, a flange 12. The gear wheel 11 is for driving engagement with a train of timing gears, only one of which 13 is shown, in the usual manner for connection to valve operating means (not shown). The flange 12 is apertured at 15 for connection to an engine flywheel (not shown) in the usual manner. In Fig 2 the construction is shown after the forging operation and before the gear wheel is formed with gear teeth.

At the forward, opposite end of the crankshaft (not shown) the crankshaft is of conventional construction having shaft portions to be received in bearings.

In Fig 1 the crankshaft and associated gear wheel 11 and flange 12 is in its finished condition. The crankshaft is made in one piece by forging so that the cranks 10, the gear wheel 11 (without teeth) and the flange 12 are formed from one piece of metal. Subsequent to the forging operation the gear wheel is machined to provide the desired tooth form for the gear wheel, as shown. Since the characteristics of the metal of the gear wheel need to be specific to its function, ie hardened to the necessary specification, a separate hardening operation is then performed on the gear wheel by heat treatment. Preferably this is achieved by induction heating of the gear wheel 11 portion.

Following the gear cutting operation on the gear wheel 11 and the heat treatment stage the unitary crankshaft construction is ready for use. In this form it is ensured that the gear wheel and the flange are secure with the crankshaft and at the desired centres, with no possibility of these components loosening in service. Conveniently the steel of the crankshaft is SAE 1548, SAE 1046 or micro-alloy steel.

## Claims

1. A method of forming a steel crankshaft for an internal combustion engine in which the crankshaft has cranks along a portion of its length and the crankshaft carries at one end a gear wheel and a flange for a fly wheel, the gear wheel lying between the cranks and the flange, the method including steps of forming the cranks, the gear wheel and the flange as a single integral unit by forging, machining the gear wheel to form gear wheel teeth, and then subjecting the gear wheel to heat treatment to obtain the desired characteristics for the gear wheel.

2. A method according to claim 1 wherein the heat treatment uses induction heating of the gear wheel.

3. A steel crankshaft for an internal combustion engine comprising a crankshaft having cranks along one portion of its length, and at one end a gear wheel and a flange for a gear wheel, the gear wheel lying between the cranks and the flange, and the cranks, gear wheel and the flange being formed as a unitary construction by forging and subsequent machining of the gear wheel, at least the gear wheel having been subjected to heat treatment following the formation of gear teeth.

## Patentansprüche

1. Methode zum Bilden einer Stahlkurbelwelle für einen Verbrennungsmotor, bei dem die Kurbelwelle entlang eines Teils ihrer Länge Kurbeln aufweist und die Kurbelwelle an einem Ende ein Getrieberad und einen Flansch für ein Schwungrad trägt, wobei das Getrieberad zwischen den Kurbeln und dem Flansch liegt, und wobei die Methode Schritte umfasst, um die Kurbeln, das Getrieberad und den Flansch als eine einzige Einheit durch Schmieden, Bearbeiten des Getrieberads zum Bilden der Getrieberadzähne zu formen und dann das Getrieberad einer Wärmebehandlung zu unterziehen, um die erwünschten Merkmale des Getrieberads zu verwirklichen.

2. Methode nach Anspruch 1, **dadurch gekennzeichnet, dass** die Wärmebehandlung das Wirbelstromerwärmen des Getrieberads umfasst.

3. Stahlkurbelwelle für einen Verbrennungsmotor mit einer Kurbelwelle mit Kurbeln entlang eines Teils ihrer Länge und an einem Ende mit einem Getrieberad und einem Flansch für das Getrieberad, wobei das Getrieberad zwischen den Kurbeln und dem Flansch liegt und die Kurbeln, das Getrieberad und der Flansch als einteilige Struktur durch Schmieden und nachfolgendes Bearbeiten des Getrieberads gebildet werden, wobei zumindest das Getrieberad nach dem Herstellen der Zähne einer Wärmebehandlung unterzogen wurde.

## Revendications

1. Procédé pour réaliser un arbre à manivelle en acier pour un moteur à combustion interne, l'arbre à manivelle présentant des manivelles sur une partie de sa longueur et portant une roue dentée et une bride pour une roue volante à une extrémité, la roue dentée étant disposée entre les manivelles et la bride, le procédé comprenant des étapes pour réaliser les manivelles, la roue dentée et la bride sous forme d'un ensemble au moyen de la forge, pour usiner la roue dentée afin de réaliser les dents de la roue et pour ensuite soumettre la roue dentée à un traitement thermique afin d'obtenir les caractéristiques souhaitées pour la roue dentée.

2. Procédé selon la revendication 1, **caractérisé en ce que** le traitement thermique comprend le chauffage à induction de la roue dentée.

3. Arbre à manivelle en acier pour un moteur à combustion interne présentant des manivelles sur une partie de sa longueur, et une roue dentée et une bride pour la roue dentée à une extrémité, la roue dentée étant disposée entre les manivelles et la bride, et les manivelles, la roue dentée et la bride étant réalisées sous forme d'un ensemble au moyen de la forge et de l'usinage ultérieur de la roue dentée, la roue dentée au moins, ayant subi un traitement thermique après la réalisation des dents.
